(19) **Europäisches Patentamt**

**European Patent Office**

**Office européen des brevets**

(11) **EP 1 174 998 B1**

(12) **EUROPEAN PATENT SPECIFICATION**

(45) Date of publication and mention
of the grant of the patent:
**14.05.2003 Bulletin 2003/20**

(51) Int Cl.$^7$: **H02P 6/08**, H02P 6/14,
H02M 1/00

(21) Application number: **00830433.9**

(22) Date of filing: **21.06.2000**

(54) **Brushless motor, method and circuit for its control**

Bürstenloser Motor, Verfahren und Schaltung zu seiner Regelung

Moteur sans balai, méthode et circuit de régulation

(84) Designated Contracting States:
**AT BE CH CY DE DK ES FI FR GB GR IE IT LI LU
MC NL PT SE**

(43) Date of publication of application:
**23.01.2002 Bulletin 2002/04**

(73) Proprietor: **MAGNETEK S.p.A.**
**52028 Terranuova Bracciolini (AR) (IT)**

(72) Inventors:
• **Canova, Antonio**
**52025 Montevarchi, Arezzo (IT)**
• **Bianchi, Andrea**
**52028 S. Giovanni Valdarno, Arezzo (IT)**

(74) Representative:
**Mannucci, Gianfranco, Dott.-Ing. et al
Ufficio Tecnico Ing. A. Mannucci
Via della Scala 4
50123 Firenze (IT)**

(56) References cited:
**US-A- 5 764 037          US-A- 6 046 922**

• **PATENT ABSTRACTS OF JAPAN vol. 017, no.
608 (E-1457), 9 November 1993 (1993-11-09) & JP
05 184188 A (HITACHI LTD;OTHERS: 01), 23 July
1993 (1993-07-23)**
• **PATENT ABSTRACTS OF JAPAN vol. 012, no.
101 (E-595), 2 April 1988 (1988-04-02) & JP 62
233069 A (MITSUBISHI ELECTRIC CORP), 13
October 1987 (1987-10-13)**
• **KIT SUM K.: 'Improved valley-fill passive power
factor correction current shaper approaches IEC
specification limits' POWERCONVERSION &
INTELLIGENT MOTION vol. 24, no. 2, February
1998, USA, pages 42,44,47 - 51**

## Description

The present invention relates to a method and circuit for the control of the supply of a "brushless" motor, especially for a trapezoidal brushless motor.

The invention also relates to a motor equipped with said circuit.

A trapezoidal brushless motor is a synchronous motor consisting of a rotor, on which permanent magnets are fitted, and a stator on which there is a star-connected three-phase winding. The description "brushless DC" (direct current motor without brushes) is based on its operating principle, which is conceptually similar to that of a direct current motor.

A direct current motor has a permanent magnet on the stator and the windings on the rotor. The rotation is obtained by appropriately switching the polarity of the magnetic field produced by the windings according to the position of the rotor. This is done by means of suitable brushes which electrically connect the windings (on the rotor) to the direct current source.

Unlike a direct current motor, a brushless motor has the permanent magnet on the rotor and the windings on the stator. The rotation is obtained by appropriately switching the polarity of the magnetic field produced by the windings according to the position of the permanent magnets on the rotor. The switching of the windings is carried out by means of an electronic converter. If made to rotate, the brushless motor acts as a generator; the voltages obtained, between a phase and the center of the star, are of trapezoidal form (from which the name is derived). Its peak value is directly proportional to the velocity of rotation according to the following relation:

$$Vpk = K_E \cdot N$$

where

N is the number of revolutions per minute
$K_E$ is a constant which depends on the motor.

These induced voltages appear independently of the cause of the rotation of the motor, and therefore also during operation as a motor, and are called back electromotive forces (Vbemf).

Trapezoidal brushless motors are frequently controlled by setting a constant current in the two active phases, without control of the third phase. The correct sequence of the active phases enables the motor to rotate in the desired direction of rotation.

To keep the phase current constant, the active phases are controlled by means of an inverter comprising electronic switches arranged in the form of a three-phase full bridge. The system is supplied with a continuous voltage. This can be obtained either by means of a battery or directly from the mains by means of an AC-DC converter. The typical layout for a mains supply to the system comprises a diode bridge and a smoothing capacitor of suitable sizes.

*Brushless motor control circuits of the above type, according to the preamble of claim 1, and relevant control methods according to the preamble of claim 12 are disclosed e.g. in JP-A-05-184188 and in JP-A-62-233069.*

*US-A-6046922 discloses a control circuit for supplying a voltage to a load. A smoothing section is connected to a rectifier bridge. The smoothing section contains two capacitors which can be connected either in parallel or in series configuration by a control switch. The configuration is chosen as a function of the inlet voltage, i.e. depending upon the voltage source and not as a function of the load to which the bulk voltage is applied.*

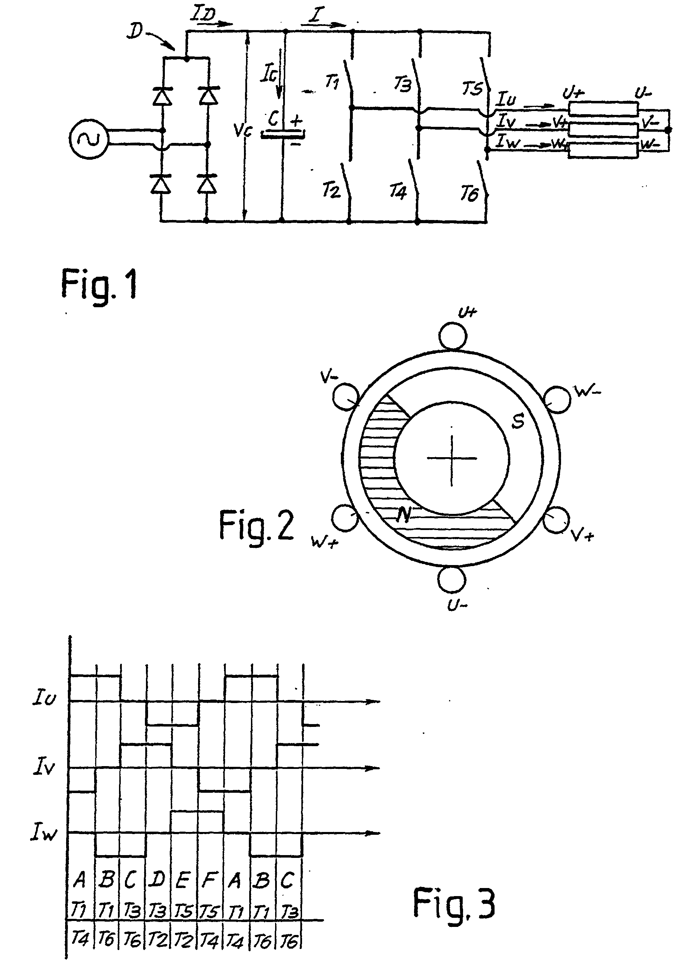

Fig. 1 shows schematically a control circuit, with an inverter for supplying the three phases, indicated by u, v and w, of the motor. The inverter comprises six controlled electronic switches, indicated by T1-T6. A continuous voltage Vc, which is present across a smoothing capacitor C connected in parallel to a diode rectifier bridge D, is supplied to the three-phase bridge formed by the switches T1-T6.

Fig. 2 shows schematically the polarities of the permanent magnet of the rotor and the three phases u, v, w forming the stator windings. Fig. 3 shows schematically the currents $I_u$, $I_v$, $I_w$ on the three phases as a function of the electrical angle, shown on the horizontal axis. it also shows which of the switches T1-T6 are closed (ON) for each interval of 60 electrical degrees (indicated by A-F). In the diagram, the rising and descending current ramps have been omitted for the sake of simplicity, an instantaneous switching of the current being assumed.

Between two successive switchings, the phase current has to remain within a tolerance range (in other words, the lower and upper values are fixed). To achieve this, the electronic switches T1-T6 of the three-phase bridge are operated in such a way that all the voltage available at the output of the rectifier bridge is present across the active phases with a suitable sign. In particular, when the current has to rise, the active phase is supplied with a positive sign, and the current increases with a slope determined by:

$$\frac{dI}{dt} = \frac{Vdc\text{-}Vbemf}{Lmot}$$

As soon as the value of the current has reached the upper limit set, the electronic switches are switched, and the active phase is supplied with a negative sign. The current decreases with a slope determined by:

$$\frac{dI}{dt} = \frac{-Vdc-Vbemf}{Lmot}$$

The current passes through the diodes and the smoothing capacitor is charged.

This configuration is maintained until the current reaches the lower limit, after which the initial configuration is restored and the current starts to increase again.

As can be deduced from the above, the switching of the phases causes stepwise variations of the currents of the phases u, v and w of the motor (Fig. 3). Because of the back electromotive force generated in the individual windings by the rotation of the motor, the supply voltage must be sufficiently greater than the back electromotive force if rapid switching is to be obtained. This means that it is sufficient to have a lower value of continuous voltage when the number of revolutions is low than when the rotation is fast. On the other hand, the high voltage is required only during the stages of switching the phase current, and is not required when there is no switching of current in the phases of the motor.

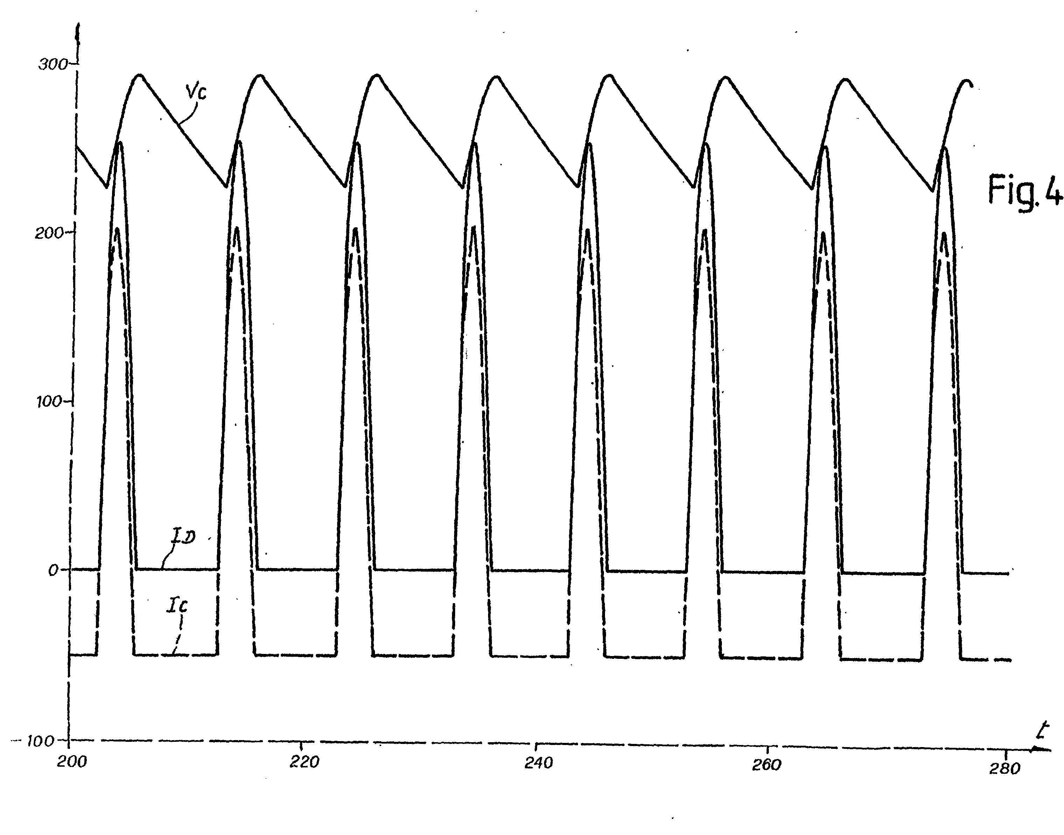

In conventional control circuits, there is a large variation of the current drawn from the mains during the electrical period, which is manifested in a reduction of the power factor. The current $I_C$ in the capacitor C and the current $I_D$ supplied by the diode bridge have a variation characterized by a marked peak, as shown in the diagram in Fig. 4, which represents the variation of $I_D$ and $I_C$ as a function of time. The same diagram also shows the variation of the voltage $V_c$ across the capacitor C.

In addition to a limited power factor, the circuits used at present for controlling brushless motors have a relatively high r.m.s. (root-mean-square) value of current absorption, making it necessary to use large-sized and expensive components for the input filter and for the rectifier bridge. Additionally, the smoothing capacitor has to be capable of reaching high voltages, equal to the peak voltage of the power supply.

The object of the present invention is to provide a control circuit for brushless motors and a corresponding method which make it possible, on one hand, to improve the power factor, and, on the other hand, to reduce the cost of the circuit components.

A further object of the present invention is to provide a less expensive circuit.

These and further objects and advantages, which will be clearly understood by a person skilled in the art from the following text, are essentially achieved with a control circuit *according to claim 1 and with a control method according to claim 12.*

The control means can advantageously comprise a controlled electronic switch, for example a transistor.

The control means and the capacitors are made and connected, in a possible embodiment of the invention, in such a way that, by the operation of the control means, the two capacitors can be connected alternately in series and in parallel to modify the supply voltage according to the actual demand across the three-phase bridge.

With this arrangement, each capacitor has to withstand not more than half of the peak voltage. It is therefore possible to use less expensive components. For a given capacitance, the total cost of the two capacitors, of the 200 V electrolytic type for example, is less than the cost of a 400 V capacitor of the snap-in type. Moreover, as will be shown subsequently, when the motor rotates at a sufficiently low velocity, a consistent improvement in the power factor is also obtained.

Further advantageous characteristics of the circuit according to the invention and of the corresponding method are shown in the attached claims.

The invention will be more clearly understood from the description and the attached drawing, which shows a practical and non-restrictive embodiment of the circuit according to the invention. In the drawing,

Figs 1 to 4 show the circuit layout, the schematic diagram of the motor, the variation of the currents in the three phases and the variation of the currents in the capacitor and In the diode bridge in the conventional circuit, as described in a summary way above;

Fig. 5 shows schematically the control circuit according to the invention;

Fig. 6 shows the circuit equivalent to that of Fig. 5, where the power supply inverter and the three phases of the stator winding have been replaced by an equivalent constant current source;

Figs 7A-7D show the various stages of operation of the circuit;

Figs 8 and 9 show the variation of the currents and voltages in the circuit, in two diagrams on different scales; and

Fig. 10 shows a modified embodiment of the circuit.

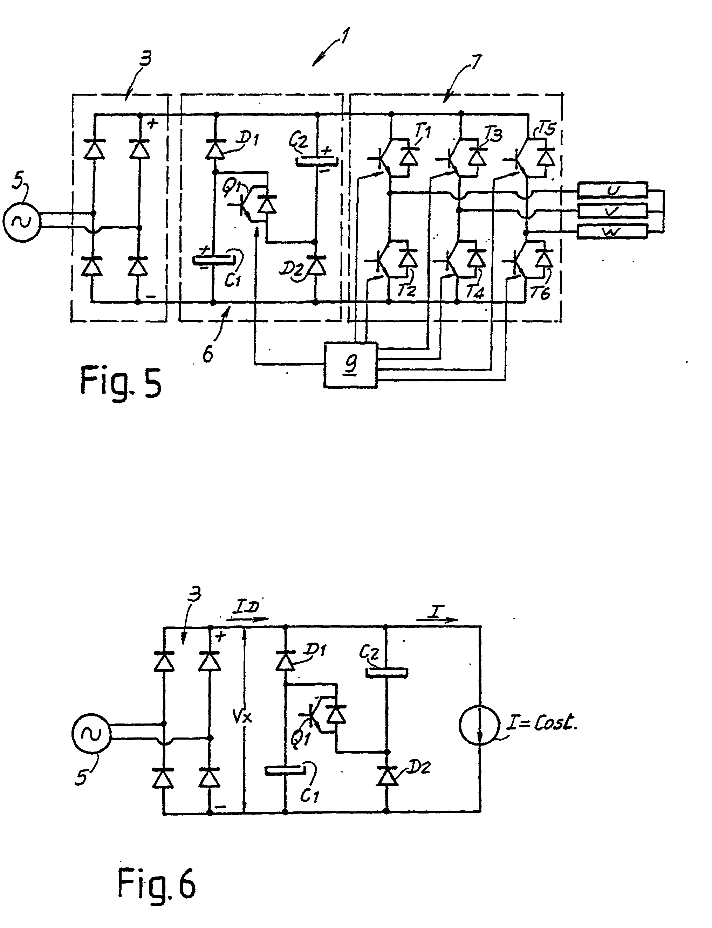

Fig. 5 shows schematically the control circuit according to the invention, indicated in a general way by 1. The number 3 indicates a diode rectifier bridge, connected to an alternating voltage source 5. The number 6 indicates in a general way a smoothing section, which comprises two smoothing capacitors C1 and C2. The first capacitor C1 has a first electrode connected through a first diode D1 to the positive pole of the rectifier bridge 3, while the other electrode is connected to the negative pole of the rectifier bridge 3. Conversely, the second capacitor C2 has one of its electrodes connected to the positive pole of the rectifier bridge and the other electrode connected through a diode D2 to the negative pole of the bridge 3.

The two capacitors C1, C2 are connected together through an electronic switch Q1, which connects the negative electrode of the capacitor C2 to the positive electrode of the capacitor C1.

The number 7 indicates the power supply inverter, which has six electronic switches T1-T6 in a three-phase bridge configuration, each of these being controlled in a known way by a programmable control unit indicated schematically by 9. This unit also controls the switching of the electronic switch Q1 in the way described below.

Since the motor is supplied with a constant current, the current at the input of the three-phase bridge 7 is constant. In suitable conditions, the three-phase bridge can be considered as a theoretical constant current generator. The equivalent layout becomes that shown in Fig. 6, where identical numbers indicate parts identical or equivalent to those of the circuit of Fig. 5.

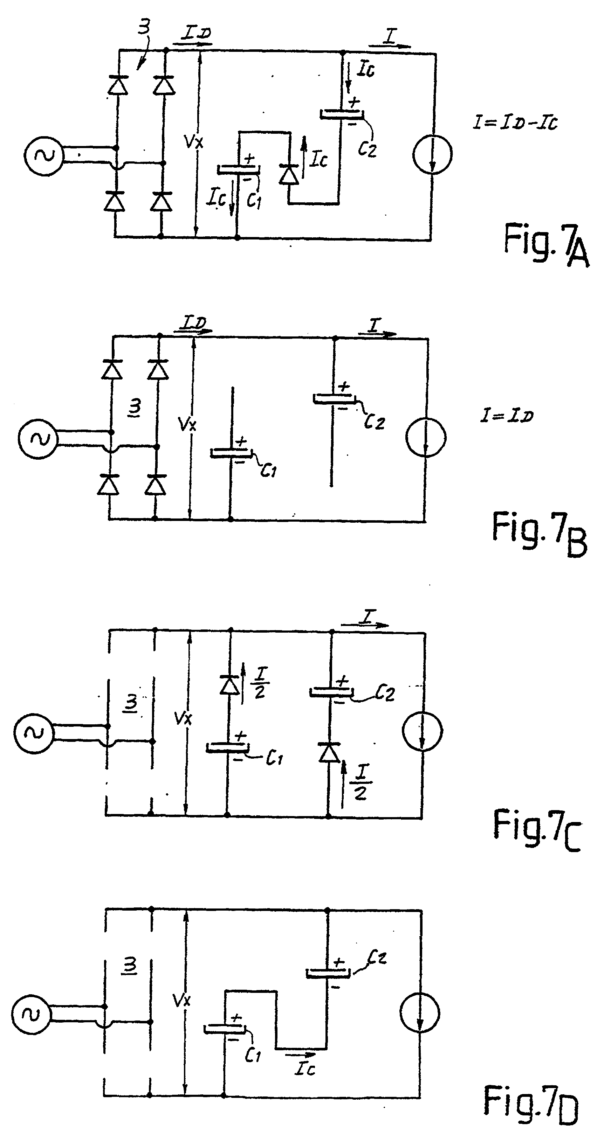

The illustrated circuit operates as follows. The stages of operation are shown schematically in Figs 7A-7D. Let us assume that the power supply voltage supplied by the source 5 is sinusoidal and of amplitude Vo.

Let us suppose that the switch Q1 is initially in the OFF state. Because of the diode in antiparallel with Q1, the capacitors C1 and C2 are connected in series with each other, and each of them is charged to a value close to Vo/2. In static conditions, the charging takes place in the proximity of the maximum absolute value of the power supply voltage upstream of the diode bridge 3, and this causes a pulse of current absorbed by the diodes of the bridge 3. This situation is shown in Fig. 7A, where the current $I_D$, part of which is supplied to the load (current I) and part of which (current $I_C$) charges the capacitors C1, C2, is supplied through the diode bridge 3.

As soon as the rectified input voltage $V_x$ becomes less than the sum of the voltages across the capacitors C1 and C2, the charging pulse of the capacitors is exhausted ($I_C$ becomes equal to zero), and since the two diodes D1 and D2 are polarized inversely, the capacitors C1 and C2 cannot supply power to the load. The diodes of the rectifier bridge 3 are kept conducting by the motor current (represented by the theoretical generator of current I) and the current $I_D$ drawn from the mains is constant and coincides with that set by the motor ($I_D = I$). The situation is shown in Fig. 7B.

When the input voltage $V_x$ takes an absolute value of less than Vo/2, the diodes of the bridge 3 cease to conduct. The diodes D1 and D2 are polarized directly and conduct. Consequently, the capacitors C1 and C2 supply power to the load, each contributing approximately half of the load current I. The voltage across the current generator which represents the three-phase bridge supplying the motor phases is stabilized at approximately Vo/2, and the capacitors C1 and C2 are in parallel with each other. The situation is that shown in Fig. 7C.

Conversely, when the switch Q1 is closed (ON) the diode D1 is in parallel with the capacitor C2 and the diode D2 is in parallel with the capacitor C1. Both the diodes D1 and D2 are polarized inversely, and the two capacitors C1 and C2 are in series with each other and supply the current $I_C = I$ to the load. The voltage across the load is approximately Vo. This situation is shown in Fig. 7D.

Clearly, whenever Q1 is closed, the voltage across the load tends toward a value close to Vo, independently of the value previously taken.

Therefore, by suitably controlling the instants of conduction of the switch Q1, the capacitors C1 and C2 can be connected in series with each other to supply the voltage Vo to the three-phase bridge, and consequently to the load, although the two capacitors C1, C2 are at a voltage of not more than Vo/2.

With reference to the schematic diagram of Fig. 3, the voltage across the three-phase bridge can remain at a low level, typically equal to Vo/2 during the operation at constant current and brought to the value Vo during the rising fronts of the current. Therefore, the switch Q1 is controlled by the unit 9 in such a way that it is closed when the rising fronts of the current appear in one of the three phases of the motor, provided that the supply voltage across the rectifier bridge 3 is not already sufficiently high. In this case, the closing pulse of the switch Q1 can be suppressed.

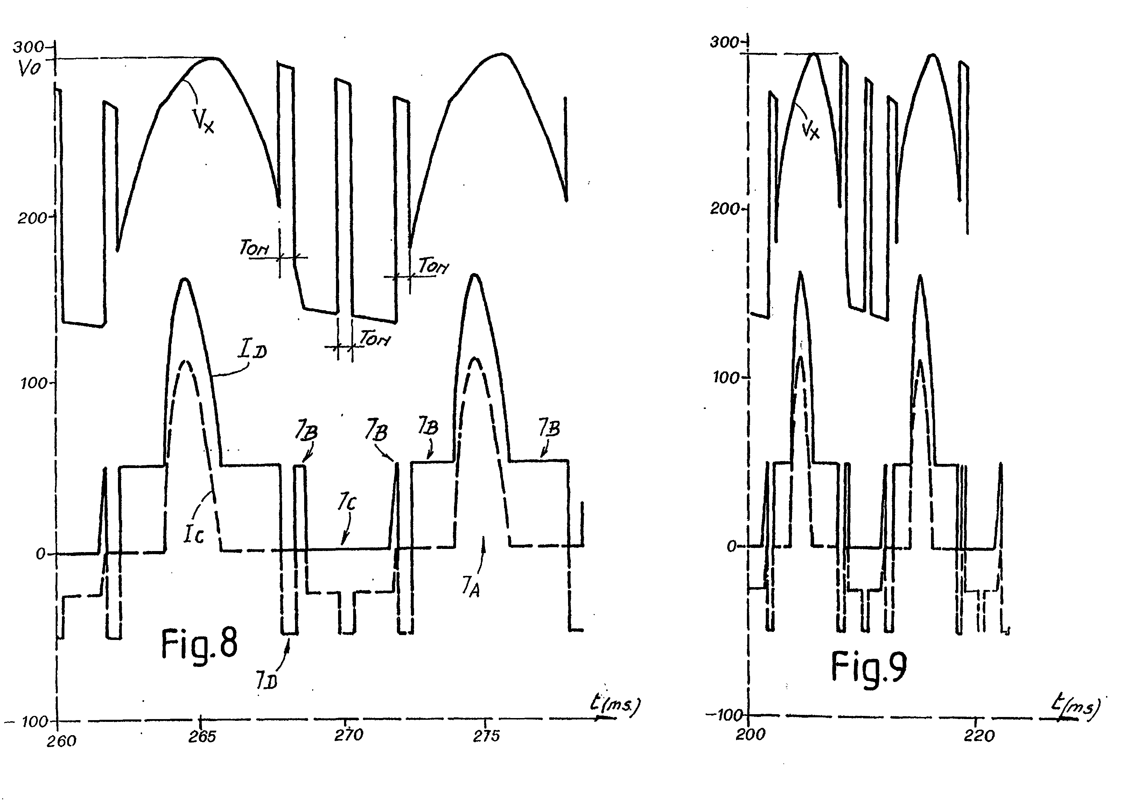

Fig. 8 shows the variation with time of the voltage ($V_x$) across the inverter, in other words across the three-phase bridge 7, together with the variation of the current ($I_D$) drawn from the mains and the current ($I_C$) to the capacitors C1, C2. The diagram shows two peaks of absorption of current ($I_D$) from the mains, coinciding with the stage of charging of the two capacitors C1, C2, which are in series at this instant. Between two successive stages of charging of the capacitors C1, C2, three voltage peaks, each lasting for a time $T_{on}$, can be identified. These voltage peaks are obtained by the closing of the switch Q1 for the time interval $T_{on}$. As shown in the diagram of Fig. 8, the voltage $V_x$ which is thus applied to the load is approximately equal to Vo, although it tends to decrease slowly because of the progressive discharging of the capacitors. The rising fronts of the current in one of the phases u, v and w of the motor are located in the intervals $T_{on}$. When a rising front of the current is located temporally in a stage in which the circuit is in the configuration shown in Fig. 7A, the closing command to the switch Q1 is suppressed, since the capacitors C1, C2 are already in series with each other and supply a voltage sufficiently dose to Vo. In the diagram of Fig. 8, the references 7A-7D indicate the areas of the diagram corresponding to the operating conditions illustrated in Figs 7A-7D respectively, for ease of comparison between the variation of the curves of Fig. 8 with the state of the circuit components as a function of time.

The diagram of Fig. 8 uses a time scale which is expanded with respect to that of the diagram of Fig. 4, for easier reading. Fig. 9 reproduces the diagram of Fig. 8, but with the time scale used in Fig. 4 on its horizontal axis. This makes it possible to determine, by direct comparison of the two diagrams, the effect obtained by the division of the smoothing capacity between the two capacitors C1, C2, and by the control of the switch Q1; the peak of current drawn from the mains is very small, with consequent advantages in terms of the power factor.

The above analysis of the behavior of the circuit of Fig. 5 is true for a condition in which motor rotation velocities are not very high. In this condition, high voltages are required only when the active phase of the motor has to be changed (six times in one electrical period). Consequently, the switch Q1 will be made to conduct only in these cases, and will remain in this state only for the time necessary for the phase current to adjust its value. It has also been remarked above that the conduction interval of the switch Q1 can be eliminated if the input voltage is sufficiently high. In order to further improve the power factor, the motor can be synchronized, when it rotates at constant velocity, with the mains voltage.

In some applications it is useful to be able to obtain very high speeds for brief periods. To do this, it is necessary to keep the switch Q1 continuously conducting, in other words to keep the capacitors C1 and C2 always in series. In this way, the benefits in terms of the power factor are lost, but not those related to the savings due to the cost of the components.

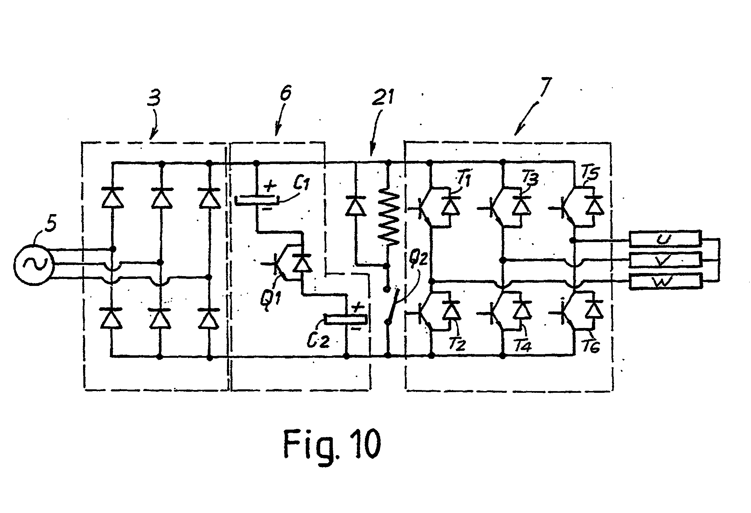

Fig. 10 shows a different embodiment of the circuit, in which a rectifier bridge 3 of the three-phase type is provided. In this case, the smoothing section 6 can again comprise two capacitors C1 and C2, connected, by means of two corresponding electrodes, to a controlled switch, again indicated by Q1. The other electrodes are connected to the positive pole and to the negative pole of the rectifier bridge 3. In this case, owing to the waveform of the output voltage of the three-phase rectifier bridge, it is not necessary to connect the capacitors alternately in series and in parallel. They will be connected in series when a high rotation velocity of the motor is required, by making the controlled switch Q1 conduct. When the operating frequency is lower, the two capacitors can be brought into the floating condition, in other words with the controlled switch Q1 in the "off" state.

Fig. 10 also shows a braking circuit of a known type, indicated in a general way by 21 and comprising a dissipation resistance in series with a second controlled switch Q2. This is closed to dissipate to the resistance the current generated by the motor in the braking phase. In the braking phase, also the controlled switch Q1 of the smoothing section 6 will be conducting.

The braking circuit can also be provided in the configuration of the preceding figures.

**Claims**

1. A control circuit for brushless motors, comprising:

   • a power supply inverter (7) for supplying the motor;

   • a rectifier bridge (3);
   • a smoothing section (6) placed between the rectifier bridge (3) and the power supply inverter (7),

   <u>characterized in that</u>: said smoothing section comprises at least two capacitors (C1, C2) and control means (D1, D2, Q1) for bringing said capacitors alternately in a series or in a parallel connection; and that said control means bring said capacitors into connection in series during the stages of switching the windings of the brushless motor, if the voltage across the rectifier bridge (3) is lower than a threshold value and the inverter has to receive an input voltage higher than that which is available on the rectifier bridge and which can be supplied by the capacitors in parallel.

2. The circuit as claimed in claim 1, in which said control means comprise at least one controlled switch (Q1).

3. The circuit as claimed in claim 1 or 2, in which said rectifier bridge (3) is a three-phase bridge and in which said control means (Q1) are placed between an electrode of a first of said capacitors (C1, C2) and an electrode of a second of said capacitors, and bring said capacitors alternately into connection in series with each other and into isolation from each other.

4. The circuit as claimed in one or more of the preceding claims, in which said power supply inverter (7) comprises a bridge of controlled switches (T1-T6).

5. The circuit as claimed in claim 4, in which said bridge of controlled switches is a three-phase bridge.

6. The circuit as claimed in one or more of the preceding claims, in which:

   - a first (C1) of said capacitors is connected by one electrode to the negative pole of the rectifier bridge and by the other electrode to the positive pole of the rectifier bridge (3) by means of a first diode (D1);
   - a second (C2) of said capacitors is connected by one electrode to the positive pole of the rectifier bridge (3) and by the other electrode to the negative pole of said rectifier bridge by means of a second diode (D2).

7. The circuit as claimed in claim 6, in which said control means comprise a controlled electronic switch (Q1) of which one end is connected between the first capacitor (C1) and the first diode (D1) and the other end is connected between the second capacitor (C2) and the second diode (D2).

8. The circuit as claimed in one or more of the preceding claims, comprising means (21) for braking the motor, with a second controlled switch (Q2), said second controlled switch being closed to obtain the braking of the motor.

9. The circuit as claimed in claim 8, in which during the braking of the motor said first and said second controlled switches (Q1, Q2) are simultaneously conducting.

10. A brushless motor comprising a control circuit as claimed in one or more of claims 1 to 9.

11. The motor as claimed in claim 10, in which said motor is a trapezoidal brushless motor.

12. A method for controlling a brushless motor, comprising the stages of:

    - generating a continuous supply voltage by means of a rectifier bridge (3) and a smoothing section (1) comprising at least two capacitors (C1,C2);
    - supplying the windings of the motor by means of an inverter (7) connected to said smoothing section;

    **characterized in that** said at least two capacitors (C1, C2) are connected alternately in series and in parallel with each other by means of at least a controlled switch (Q1), said capacitors being connected in series during the switching stages of the winding of the brushless motor it the voltage across the rectifier bridge is lower than a threshold value and the inverter has to receive an input voltage higher than that which is available on the rectifier bridge and which can be supplied by the capacitors in parallel.

13. The method of claim 12, **characterized in that** said brushless motor is a trapezoidal motor.

**Patentansprüche**

1. Steuerschaltung für bürstenlose Motoren, mit:

   • einem Versorgungsspannungsinverter (7) zum Speisen des Motors;
   • einer Gleichrichterbrücke (3);
   • einem Glättungsabschnitt (6), der zwischen der Gleichrichterbrücke (3) und dem Versorgungsspannungsinverter (7) angeordnet ist,

   **dadurch gekennzeichnet, dass** der Glättungsabschnitt wenigstens zwei Kondensatoren (C1, C2) und Steuerungsmittel (D1, D2, Q1) aufweist, um die Kondensatoren alternierend in Reihe oder parallel zu schalten; und dass die Steuerungsmittel die Kondensatoren während der Schaltstufen der Wicklungen des bürstenlosen Motors in Reihe schalten, wenn die Spannung an der Gleichrichterbrücke (3) niedriger als ein Schwellwert ist und der Inverter eine Eingangsspannung zu empfangen hat, die höher als diejenige ist, welche an der Gleichrichterbrücke zur Verfügung steht und die den Kondensatoren parallel zugeführt werden kann.

2. Schaltung nach Anspruch 1, wobei die Steuerungsmittel wenigstens einen gesteuerten Schalter (Q1) aufweisen.

3. Schaltung nach Anspruch 1 oder 2, wobei die Gleichrichterbrücke (3) eine Dreiphasenbrücke ist und wobei die Steuerungsmittel (Q1) zwischen einer Elektrode eines ersten der Kondensatoren (C1, C2) und einer Elektrode eines zweiten dieser Kondensatoren angeordnet sind, und die Kondensatoren alternierend miteinander in Reihe schalten und sie voneinander isolieren.

4. Schaltung nach einem oder mehreren der vorstehenden Ansprüche, wobei der Versorgungsspannungsinverter (7) eine Brücke gesteuerter Schalter (T1 - T6) aufweist.

5. Schaltung nach Anspruch 4, wobei die Brücke gesteuerter Schalter eine Dreiphasenbrücke ist.

6. Schaltung nach einem oder mehreren der vorstehenden Ansprüche, wobei:

   - ein erster (C1) dieser Kondensatoren mittels einer ersten Diode (D1) mit einer Elektrode an den negativen Pol der Gleichrichterbrücke und mit der anderen Brücke an den positiven Pol der Gleichrichterbrücke (3) angeschlossen ist;
   - ein zweiter (C2) dieser Kondensatoren mittels einer zweiten Diode (D2) mit einer Elektrode an den positiven Pol der Gleichrichterbrücke (3) und mit der anderen Elektrode an den negativen Pol der Gleichrichterbrücke angeschlossen ist.

7. Schaltung nach Anspruch 6, wobei die Steuerungsmittel einen gesteuerten elektronischen Schalter (Q1) aufweisen, dessen eines Ende zwischen den ersten Kondensator (C1) und die erste Diode (D1) geschaltet ist, und dessen anderes Ende zwischen den zweiten Kondensator (C2) und die zweite Diode (D2) geschaltet ist.

**8.** Schaltung nach einem oder mehreren der vorstehenden Ansprüche,
mit Mitteln (21) zum Bremsen des Motors, mit einem zweiten gesteuerten Schalter (Q2), wobei der zweite gesteuerte Schalter zum Erzielen des Bremsen des Motors geschlossen wird.

**9.** Schaltung nach Anspruch 8,
wobei während des Bremsens des Motors die ersten und zweiten gesteuerten Schalter (Q1, Q2) gleichzeitig leitend sind.

**10.** Bürstenloser Motor mit einer Steuerschaltung wie nach einem oder mehreren der Ansprüche 1 bis 9.

**11.** Motor nach Anspruch 10, wobei der Motor ein trapezoider bürstenloser Motor ist.

**12.** Verfahren zum Steuern eines bürstenlosen Motors, mit den Schritten:

- Erzeugen einer kontinuierlichen Versorgungsspannung mittels einer Gleichrichterbrücke (3) und eines Glättungsabschnittes (1) mit wenigstens zwei Kondensatoren (C1, C2);
- Speisen der Wicklungen des Motors mittels eines Inverters (7), der an den Glättungsabschnitt angeschlossen ist;

**dadurch gekennzeichnet, dass** die wenigstens zwei Kondensatoren (C1, C2) mittels wenigstens eines gesteuerten Schalters (Q1) alternierend in Reihe und parallel zueinander geschaltet werden, wobei die Kondensatoren während des Schaltens der Stufen der Wicklungen des bürstenlosen Motors in Reihe geschaltet sind, wobei die Spannung an der Gleichrichterbrücke niedriger als ein Schwellwert ist und der Inverter eine Eingangsspannung zu empfangen hat, die höher als diejenige, welche an der Gleichrichterbrücke zur Verfügung steht, ist, und die durch die Kondensatoren parallel zugeführt werden kann.

**13.** Verfahren nach Anspruch 12,
**dadurch gekennzeichnet, dass** der bürstenlose Motor ein trapezoider Motor ist.

## Revendications

**1.** Circuit de commande pour des moteurs sans balai, comprenant:

- un onduleur d'alimentation en énergie (7) pour alimenter le moteur;
- un pont redresseur ;
- une section de lissage (6) disposée entre le pont redresseur (3) et l'onduleur d'alimentation en énergie (7) ;

**caractérisé en ce que** ladite section de lissage comprend au moins deux condensateurs (C1, C2) et des moyens de commande (D1, D2, Q1) pour brancher lesdits condensateurs alternativement selon un branchement en série ou en parallèle; et **en ce que** lesdits moyens de commande raccordent lesdits condensateurs selon un branchement en série pendant les étapes de commutation des enroulements du moteur sans balai, si la tension aux bornes du pont redresseur (3) est inférieure à une valeur de seuil, et si l'onduleur doit recevoir une tension d'entrée supérieure à celle qui est disponible au niveau du pont redresseur et qui peut être délivrée par les condensateurs en parallèle.

**2.** Circuit selon la revendication 1, dans lequel lesdits moyens de commande comprennent au moins un interrupteur commandé (Q1).

**3.** Circuit selon la revendication 1 ou 2, dans lequel ledit pont redresseur (3) est un pont triphasé et dans lequel lesdits moyens de commande (Q1) sont disposés entre une électrode d'un premier desdits condensateurs (C1, C2) et une électrode d'un second desdits condensateurs, et dans lequel lesdits condensateurs sont raccordés alternativement dans une connexion en série entre eux et dans un état isolé les uns par rapport aux autres.

**4.** Circuit selon une ou plusieurs des revendications précédentes, selon lequel ledit onduleur d'alimentation en énergie (7) comprend un pont d'interrupteurs commandés (T1-T6).

**5.** Circuit selon la revendication 4, dans lequel ledit pont d'interrupteurs commandés est un pont triphasé.

**6.** Circuit selon une ou plusieurs des revendications précédentes, dans lequel:

- un premier (C1) desdits condensateurs est connecté par une électrode à un pôle négatif du pont redresseur et par l'autre électrode au pôle positif du pont redresseur (3) au moyen d'une première diode (D1);
- un second (C2) desdits condensateurs est connecté par une électrode au pôle positif du pont redresseur (3) et par l'autre électrode au pôle négatif dudit pont redresseur, au moyen d'une seconde diode (D2).

**7.** Circuit selon la revendication 6, dans lequel lesdits moyens de commande comprennent un interrupteur électronique commandé (Q1), dont une extrémité est connectée entre le premier condensateur (C1) et la première diode (D1), et dont l'autre extrémité est connectée entre le second condensateur (C2) et la seconde diode (D2).

8. Circuit selon une ou plusieurs des revendications précédentes, comprenant des moyens (21) pour freiner le moteur, avec un second interrupteur commandé (Q2), ledit second interrupteur commandé étant fermé pour l'obtention du freinage du moteur.

9. Circuit selon la revendication 8, dans lequel lors du freinage du moteur, lesdits premier et second interrupteurs commandés (Q1, Q2) sont simultanément conducteurs.

10. Moteur sans balai comprenant un circuit de commande selon une ou plusieurs des revendications 1 à 9.

11. Moteur selon la revendication 10, dans lequel ledit moteur est un moteur trapézoïdal sans balai.

12. Procédé pour commander un moteur sans balai, comprenant les étapes consistant à:

   - produire une tension d'alimentation continue à l'aide d'un pont redresseur (3) et d'une section de lissage (1) comprenant au moins deux condensateurs (C1, C2);
   - alimenter les enroulements du moteur au moyen d'un onduleur (7) connecté à ladite section de lissage;

   **caractérisé en ce que** lesdits au moins deux condensateurs (C1, C2) sont connectés alternativement en série et en parallèle entre eux à l'aide d'au moins un interrupteur commandé (Q1), lesdits condensateurs étant connectés en série pendant les étapes de commutation de l'enroulement du moteur sans balai, si la tension aux bornes du pont redresseur est inférieure à une valeur de seuil, et si l'onduleur doit recevoir une tension d'entrée supérieure à celle qui est disponible au niveau du pont redresseur, et qui peut être délivrée par les condensateurs en parallèle.

13. Procédé selon la revendication 12, **caractérisé en ce que** ledit moteur sans balai est un moteur trapézoidal.

Fig. 1

Fig. 2

| A | B | C | D | E | F | A | B | C |
|---|---|---|---|---|---|---|---|---|
| T1 | T1 | T3 | T3 | T5 | T5 | T1 | T1 | T3 |
| T4 | T6 | T6 | T2 | T2 | T4 | T4 | T6 | T6 |

Fig. 3

Fig.4

Fig. 5

Fig. 6

Fig. 7A

$I = I_D - I_C$

Fig. 7B

$I = I_D$

Fig. 7C

Fig. 7D

Fig.8

Fig.9

EP 1 174 998 B1

Fig. 10

14